# EUROPEAN PATENT APPLICATION

(11) **EP 1 099 603 A1**
(43) Date of publication of application: **16.05.2001**
(21) Application number: 00203866.9
(22) Date of filing: 06.11.2000
(51) Int. Cl.: B60R 9/06

(54) **Luggage carrier**

(30) Priority: 10.11.1999 NL 1013547
(71) Applicant: Van Swaemen, Antonius Gerardus, 5641 AP Eindhoven (NL)
(72) Inventor: Van Swaemen, Antonius Gerardus, 5641 AP Eindhoven (NL)
(74) Representative: Veldman-Dijkers, Cornelia G.C., Ir.

(57) **Abstract**

A luggage carrier suitable for being attached to a vehicle, which luggage carrier comprises a frame (10) to be fixed to a vehicle and a luggage support connected thereto. The luggage support comprises a sleeve (4) which extends substantially vertically in use, said sleeve (4) having a substantially constant cross-sectional dimension at a free end remote from the frame (10).

## Description

The invention relates to a luggage carrier suitable for being attached to a vehicle, which luggage carrier comprises a frame to be fixed to a vehicle and a luggage support connected thereto.

With a luggage carrier which is known per se, which luggage carrier is suitable for being attached to a car, a frame is fixed to the underside of a car and the luggage support connected to the frame comprises a towing hook fitted with a ball. It is possible to connect a coupling mechanism of a trailer or caravan to the towing hook, for example. Furthermore it is possible to mount a bicycle carrier on the towing hook.

At present vehicles having low-energy engines are being developed. One drawback of the use of such engines, however, is the fact that a vehicle having such an engine is no longer suitable for towing a trailer or a caravan. Consequently, it is not allowed to fit such vehicles with a towing hook. Nevertheless, there is a reasonable market for such vehicles among people for whom the possibility to transport a trailer or a caravan is not relevant. A more significant drawback, however, is the fact that the ban on fitting vehicles of this kind with a towing hook also implies that it is not possible to transport a bicycle carrier with the vehicle. The fact of the matter is that such vehicles do possess sufficient engine power to support and transport the weight of a bicycle carrier and the bicycles to be placed thereon.

The object of the invention is to provide a luggage carrier which makes it possible, among other things, to transport a bicycle carrier, for example, with vehicles of this kind.

This objective is accomplished with the luggage carrier according to the invention in that the luggage support comprises a bar which extends substantially vertically in use, said bar having a substantially constant cross-sectional dimension at a free end remote from the frame.

The bar is not fitted with a ball that is normally used with a towing hook, so that it is not possible to connect a coupling mechanism of a caravan or a trailer to the bar.

Since the free end of the bar has a substantially constant cross-sectional dimension it is indeed suitable, however, for being passed through a tubular attachment member of a bicycle carrier that is known per se.

The invention will now be explained in more detail with reference to the drawings, wherein:
Figures 1A-1C show a luggage support of a luggage carrier according to the invention in side view, front view and bottom view, respectively;
Figures 2A-2C show a frame of a luggage carrier according to the invention in side view, front view and bottom view, respectively;
Figure 3 is a side view of a luggage carrier according to the invention and also of a bicycle carrier in unmounted position;
Figure 4 shows the luggage carrier of Figure 3 and also the bicycle carrier in mounted position.

Parts corresponding to each other are indicated by the same numerals in the figures.

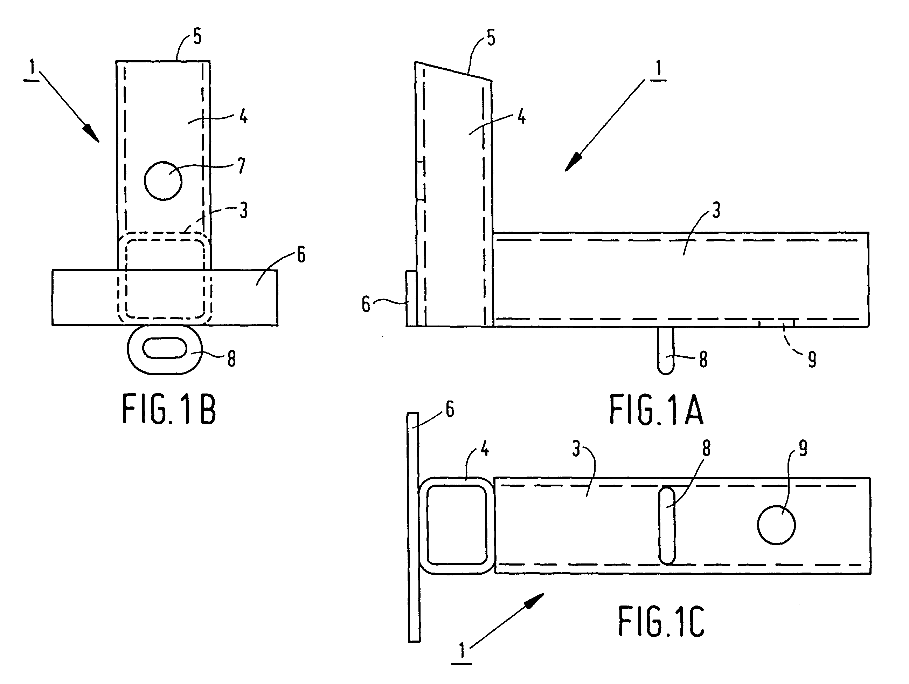

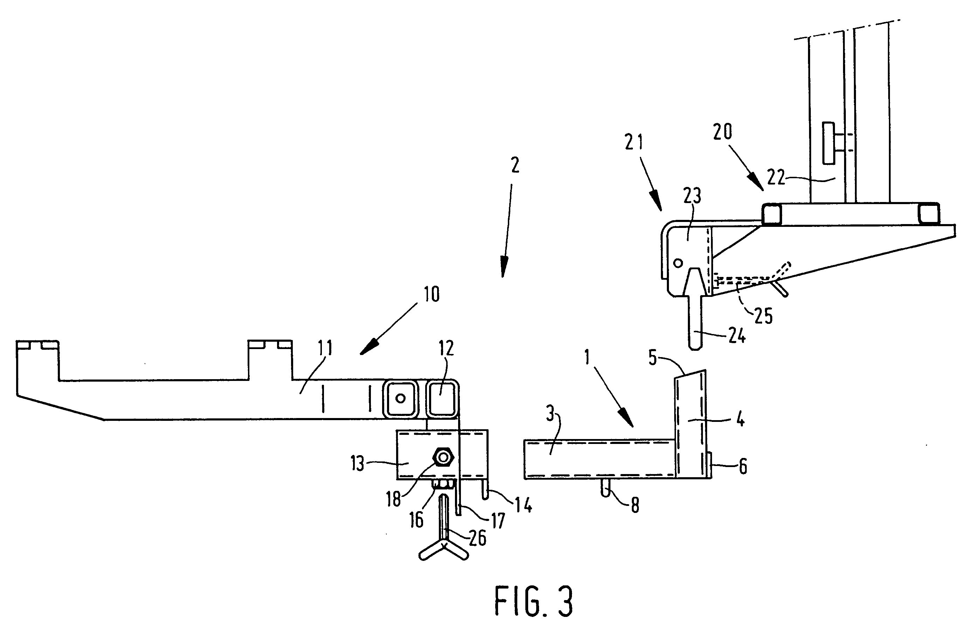

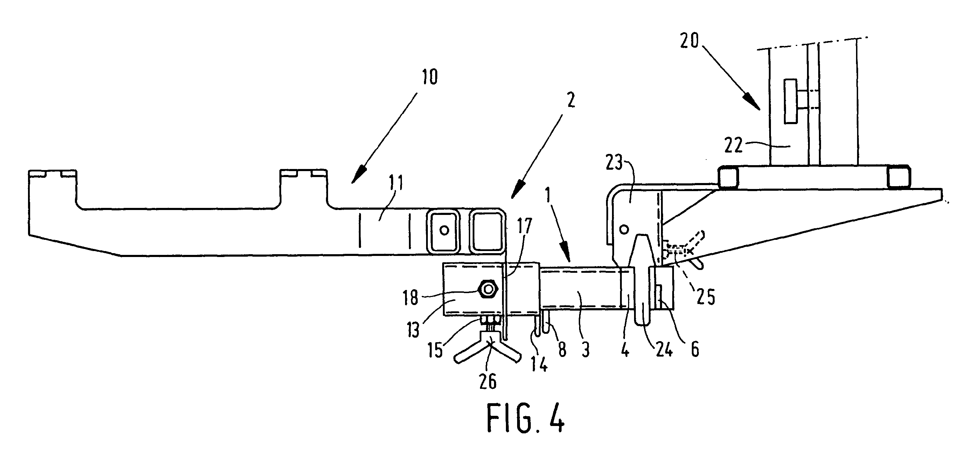

Figures 1A-1C show a luggage support 1 of a luggage carrier 2 (see Figures 3 and 4) according to the invention. The luggage support 1 comprises a horizontally extending, rectangular metal sleeve 3 and a vertically extending rectangular metal sleeve 4, which extends transversely thereto. Rectangular metal sleeve 4 has a bevelled free end 5 on a side remote from sleeve 3. A strip 6 extending transversely to sleeve 3 and sleeve 4 is connected to sleeve 4 on a side remote from sleeve 3. As can be seen in Figure 1C, strip 6 extends on either side of the sleeve 4. Sleeve 4 is furthermore provided with an opening 7 disposed between strip 6 and free end 5.

Sleeve 3 is provided with an eye 8 and an opening 9 on an underside remote from free end 5. Opening 9 is present on a side of eye 8 remote from sleeve 4.

Sleeve 4 forms a bar having a constant cross-sectional dimension, over which or in which a coupling element of for example a bicycle carrier can be fitted, as will be explained in more detail with reference to Figures 3 and 4.

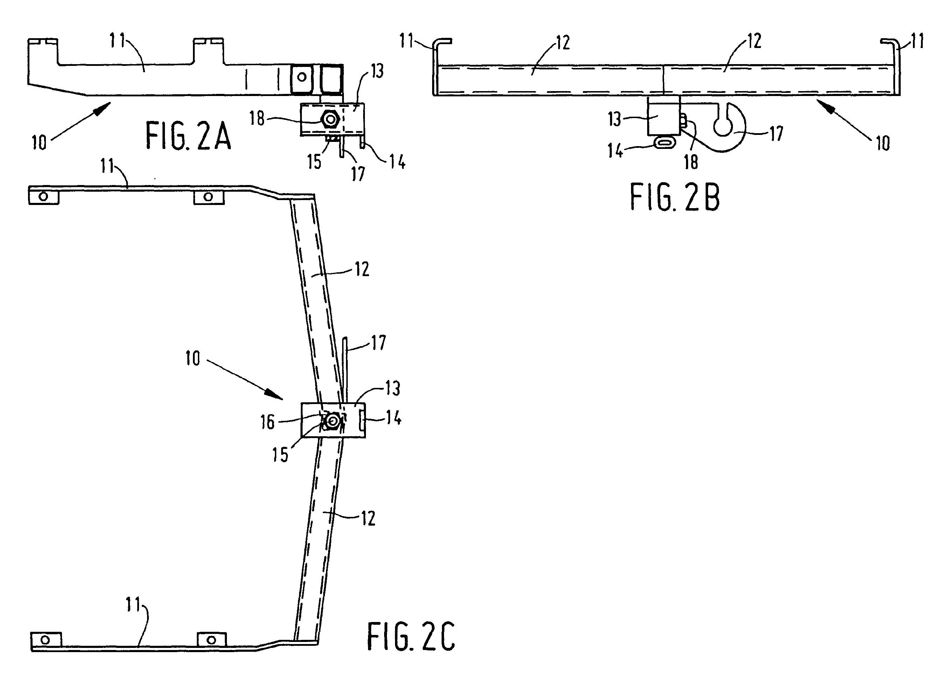

Figures 2A-2C are a side view, a front view and a bottom view, respectively, of a frame 10 of a luggage carrier 2 according to the invention. Frame 10 comprises two spaced-apart metal flanges 11 extending substantially parallel to each other, which are interconnected by means of two metal sleeves 12 at one end. Flanges 11 and sleeves 12 are suitable for being fixed to a vehicle. Flanges 11 and sleeves 12 of this type are known per se with frames that are fixed to cars for mounting a towing hook. The dimensions of flanges 11 and sleeves 12 depend on the type of vehicle or car to which they are to be fixed.

Frame 10 furthermore includes a horizontally extending metal sleeve 13, whose internal dimensions are slightly larger than the external dimensions of sleeve 3 of luggage support 1. Sleeve 13 is provided with and eye 14 and an opening 15 on a side remote from sleeves 12. Positioned opposite opening 15 is a nut 16. Sleeve 13 furthermore includes a plate 17 extending transversely to sleeve 13, on which a multiple socket (not shown) can be mounted, which may be connected to the vehicle. Sleeve 13 furthermore includes an adjusting bolt 18 extending into sleeve 13 in transverse direction.

Figure 3 is a side view of a luggage carrier according to the invention, which includes the luggage support 1 that is shown in Figures 1A-1C and the frame 10 that is shown in Figures 2A-2C. Luggage carrier 2 can be attached to any type of vehicle, but it is in particular intended for vehicles which are not allowed to be fitted with a towing hook but which are allowed to transport bicycles, for example. Besides luggage carrier 2 according to the invention, Figures 3 also shows a well-known bicycle carrier 20, which includes a coupling portion and a portion 22 that is rigidly connected thereto, on which bicycles can be placed. A bicycle carrier is for example known from EP-A1-0 666 197.

Coupling element 21 includes a vertically extending metal sleeve 23, whose internal dimensions are slightly larger than the external dimensions of sleeve 4 of luggage support 1. Coupling element 21 furthermore includes two pins 24 disposed on either side of sleeve 23. Sleeve 23 furthermore includes a fixing bolt 25 extending in transverse direction into sleeve 23.

In the unmounted position that is shown in Figure 3, frame 10, luggage support 1 and bicycle carrier 20 are not connected to each other.

Frame 10 is attached to a vehicle (not shown), by means which are known per se, for transporting bicycles or other objects. Then the sleeve 3 of the luggage support 1 is slid into sleeve 13 of frame 10 until the eye 8 of sleeve 3 abuts against eye 14 of sleeve 13. In order to prevent theft and as an additional protection, a padlock is fitted through the two eyes 8, 14. Then a fixing bolt 26 is turned through nut 16, opening 15 of sleeve 13 and opening 9 of sleeve 3, as a result of which sleeve 3 is firmly connected to sleeve 13. Before sleeve 3 is slid into sleeve 13, an adjusting bolt has been turned so far into sleeve 13 at the factory that sleeve 3 will fit sleeve 13 upon being slid into said sleeve 13. Then sleeve 23 of the bicycle carrier 20 is slid over sleeve 5 of luggage support 1, whereby the pins 24 present on either side of sleeve 5 are positioned opposite and in abutment with strip 6. In this manner it is ensured that the bicycle carrier is correctly positioned with respect to luggage support 1. In addition, the pins 24 that abut against strip 6 prevent luggage carrier 20 from pivoting about a vertically extending axis. Furthermore fixing bolt 25 is tightened, so that it is turned into sleeve 4 through opening 7, as a result of which bicycle carrier 20 will be firmly connected to sleeve 4. Luggage carrier 2 and bicycle carrier 20 now occupy the mounted position that is shown in Figure 4.

The downwardly sloping end 5 of sleeve 4 makes it easy to slide sleeve 4 into sleeve 23.

Sleeve 3 or sleeve 4 may also be massive. Sleeve 3 or 4 may furthermore be square, round, triangular, trapezoidal or oval instead of rectangular.

It is also possible to connect luggage support 1 fixedly rather than detachably to frame 10.

Instead of using a strip 6, it is also possible to provide bushes or eyes beside sleeve 4 rather than a strip 6, into which the pins 24 are slid.

Since the luggage support is detachable, no parts project beyond the car (bumper) when the luggage support is not in use, so that it is not possible to bump against such parts. This also helps to prevent parking damage. Nor does the length of the car change.

## Claims

1. A luggage carrier suitable for being attached to a vehicle, which luggage carrier comprises a frame to be fixed to a vehicle and a luggage support connected thereto, characterized in that the luggage support comprises a bar which extends substantially vertically in used, said bar having a substantially constant cross-sectional dimension at a free end remote from the frame.

2. A luggage carrier according to claim 1, characterized in that said bar comprises a rectangular tube.

3. A luggage carrier according to claim 1 or 2, characterized in that said luggage support is detachably connected to the frame.

4. A luggage carrier according to claim 3, characterized in that said luggage support comprises a rod extending transversely to said bar, which rod can be slid into the frame.

5. A luggage carrier according to any one of the preceding claims 3 - 4, characterized in that said rod and said frame include eyes, which lie opposite each other in the position wherein the rod has been slid into the frame.

6. A luggage carrier according to any one of the preceding claims 3 - 5, characterized in that said frame comprises a sleeve, in which said rod can be slidably mounted.

7. A luggage carrier according to any one of the preceding claims 3 - 6, characterized in that said sleeve includes an adjusting bolt, which extends transversely to the central axis of the sleeve.

8. A luggage carrier according to any one of the preceding claims, characterized in that said luggage support comprises a strip extending transversely to said bar, which strip is fixed to said bar on a side remote from said frame.

9. A luggage carrier according to any one of the preceding claims, characterized in that said bar is provided with an opening disposed some distance away from said free end.
